# EUROPÄISCHE PATENTSCHRIFT

(11) **EP 1 015 782 B1**
(45) Veröffentlichungstag und Bekanntmachung des Hinweises auf die Patenterteilung: **05.06.2002**
(21) Anmeldenummer: 98950064.0
(22) Anmeldetag: 21.09.1998
(51) Int. Cl.: F16D 3/78

(54) **ELASTISCHER GELENKKÖRPER**
ELASTIC ARTICULATED BODY
ELEMENT ARTICULE ELASTIQUE

(30) Priorität: 25.09.1997 DE 19742361
(43) Veröffentlichungstag der Anmeldung: 05.07.2000
(73) Patentinhaber: SGF SÜDDEUTSCHE GELENKSCHEIBENFABRIK GMBH & CO. KG., 84478 Waldkraiburg (DE)
(72) Erfinder: ANDRÄ, Rainer, D-65554 Limburg (DE); SCHNEIDER, Wilfried, D-84478 Waldkraiburg (DE); MAIERBACHER, Georg, D-83527 Kirchdorf (DE)
(74) Vertreter: Goetz, Rupert, Dipl.-Ing.
(86) Internationale Anmeldenummer: EP9806007
(87) Internationale Veröffentlichungsnummer: WO9915803

(56) Entgegenhaltungen:
- CH-A- 274 957
- DE-A- 3 734 089
- DE-U- 9 017 209
- GB-A- 546 351
- US-A- 4 226 381
- US-A- 4 682 901

## Beschreibung

Die Erfindung betrifft einen elastischen Gelenkkörper mit
- mindestens einem Schlingenpaket,
- Kragenbuchsen, die je einen Buchsenteil und je einen daran einstückig angeformten ersten Kragen aufweisen, mit ihrem Buchsenteil durch das Schlingenpaket hindurchgesteckt sind und mit ihrem Kragen eine erste Schlingenpaketseite axial abstützen,
- einem zweiten Kragen, der mit dem Buchsenteil axial zusammengesteckt ist und eine zweite Schlingenpaketseite axial abstützt, und
- einer gummielastischen Umhüllung, in die das Schlingenpaket zumindest teilweise eingebettet ist.

Solche elastischen Gelenkkörper sind beispielsweise in Form von Gelenkscheiben zum kardanischen Verbinden von Wellen, insbesondere im Antriebsstrang von Kraftfahrzeugen, gebräuchlich. Bei der Montage solcher Gelenkkörper werden die Kragenbuchsen mittels durch sie hindurchgesteckter Gewindebolzen, Nieten od.dgl. an Wellenflanschen od.dgl. befestigt.

Bei einem aus DE-U-1 688 879 bekannten Gelenkkörper der genannten Gattung sind vier Schlingenpakete rings um eine zentrale Öffnung des Gelenkkörpers einander paarweise überlappend angeordnet, so daß sie einen in sich geschlossenen Kranz bilden. In jedem der Überlappungsbereiche ist ein Paar Kragenbuchsen angeordnet, die je einen kreisförmigen Kragen und je ein zylindrisches Buchsenteil aufweisen und axial von beiden Seiten her derart zusammengesteckt sind, daß die Buchsenteile auf ihrer gesamten Länge ineinandergreifen. Eine zuverlässige axiale Fixierung der Schlingenpakete hängt davon ab, daß die beiden Buchsenteile in ihren Durchmessern so aufeinander abgestimmt sind, daß sie stramm ineinanderpassen. Diese Voraussetzung läßt sich in einer Massenproduktion nicht oder nur mit erheblichem Aufwand erfüllen. In jedem Fall bedeutet die Verdoppelung der Buchsenteile einen zusätzlichen Materialaufwand und vor allem einen Platzbedarf, der besser für die Unterbringung stärkerer Schlingenpakete genutzt werden könnte.

Um die Schlingenpakete mit geringerem Materialaufwand für das Vulkanisieren der Umhüllung axial zu fixieren und im Betrieb zu führen, ist man beispielsweise gemäß DE-C-39 42 432 dazu übergegangen, elastische Gelenkkörper in Form von Gelenkscheiben mit mehreren einander überlappenden Schlingenpaketen mit glatten zylindrischen Buchsen auszustatten, die sich durch die Überlappungsbereiche hindurcherstrecken und auf deren Enden je eine Kragenbuchse zum axialen Fixieren der Schlingenpakete aufgepreßt wird. Die paarweise zusammengehörigen Kragenbuchsen sind dadurch in einem vorbestimmten Abstand voneinander sowie axial miteinander fluchtend gehalten.

Später hat man gemäß DE-C-43 04 274 auf die beiden Enden der durchgehenden Buchse anstelle der Kragenbuchsen je eine Ringscheibe aufgepreßt, die radial nach innen vorspringende, sich auf der durchgehenden Buchse festkrallende Zähne aufweist. Dadurch vermindert sich der Platzbedarf der Anordnung zum axialen Fixieren der Schlingenpakete weiter. Das Aufpressen der verzahnten Ringscheiben auf je ein Ende einer axial durchgehenden Buchse erfordert allerdings ebenso wie das Aufpressen von Kragenbuchsen einen erheblichen Kraftaufwand, der mit einer Vorrichtung aufgebracht werden muß, die so einstellbar ist, daß der für die Schlingenpakete vorgegebene axiale Zwischenraum zwischen einander gegenüberliegenden Kragen genau eingehalten wird. Diese Voraussetzungen lassen sich mit einem schnell arbeitenden Montageautomaten nicht ohne weiteres erfüllen.

In ähnlicher Weise ist eine aus DE-U-94 20 256 bekannte Spule aus einem rohrförmigen Spulenkern und zwei Spulenflanschen zusammengesetzt, die mit je einem Ringsteg in je einen Stirnrand des Spulenkerns eingreifen und mit ihm verrastet sind. Zu diesem Zweck weisen die beiden Stirnränder des Spulenkerns radial nach innen ragende Raststege mit Sägezahnprofil auf, und die Ringstege der Spulenflansche haben entsprechende Rastprofile, welche die Raststege des Spulenkerns radial innen umgreifen und axial hinter ihnen einrasten. Als Buchsen für einen Gelenkkörper der eingangs beschriebenen Gattung sind diese bekannten Spulen nicht vorgesehen und auch nicht geeignet, weil die radial innerhalb des Spulenkerns angeordneten Rastverbindungen die Befestigung des Gelenkkörpers mittels Gewindebolzen, Nieten od.dgl. behindern und/oder dabei zerstört werden würden.

Aus US-A-4,682,901 ist eine Kugellageranordnung bekannt, die als Hauptbestandteile einen Außenring und einen Innenring hat, welcher seinerseits aus einem ersten und einem zweiten Innenringabschnitt zusammengesetzt ist. Der Außenring und der zusammengesetzte Innenring begrenzen zwischen sich eine Kugellaufbahn, in der einzelne Kugeln gehalten sind. Beide Innenringabschnitte haben je einen Kragen; der Außenring ist zwischen diesen beiden Kragen so angeordnet, daß er sich nicht axial verschieben kann. Der erste Innenringabschnitt hat außerdem ein Buchsenteil, das sich von einer ringförmigen axial inneren Schulter des ersten Ringabschnittes wegerstreckt. In der Mitte dieses Buchsenteils ist eine radial äußere Ringrippe ausgebildet, die in eine entsprechende Ringnut in der Mitte des zweiten Innenringabschnittes eingerastet ist. Die Ringrippe und die Ringnut bilden also miteinander eine Schnappverbindung. Dadurch sind die beiden Innenringabschnitte so zusammengehalten, daß sie gemeinsam den radial inneren Teil der Kugellaufbahn bilden.

Der Erfindung liegt die Aufgabe zugrunde, die Herstellung elastischer Gelenkkörper mit mindestens einem in seiner axialen Lage fixierten Schlingenpaket zu vereinfachen.

Diese Aufgabe ist erfindungsgemäß mit den Merkmalen des Patentanspruchs 1 gelöst. Vorteilhafte Weiterbildungen ergeben sich aus den Unteransprüchen.

Ausführungsbeispiele der Erfindung werden im folgenden anhand schematischer Zeichnungen mit weiteren Einzelheiten beschrieben. Es zeigen:
- Fig. 1: einen erfindungsgemäßen Gelenkkörper in Seitenansicht,
- Fig. 2: den Schnitt II-II in Fig.1,
- Fig. 3: eine Buchsenanordnung in einem axialen Schnitt entsprechend Fig.2, jedoch in größerem Maßstab,
- Fig. 4: eine zu der Buchsenanordnung gehörige Kragenbuchse in Seitenansicht gemäß Pfeil IV in Fig.3,
- Fig. 5: den axialen Schnitt V-V in Fig.4,
- Fig. 6: einen zu der selben Buchsenanordnung gehörigen Kragen in Seitenansicht gemäß Pfeil VI in Fig.3,
- Fig. 7: den axialen Schnitt VII-VII in Fig.6,
- Fig. 8: eine alternative Buchsenanordnung in einem der Fig.3 entsprechenden axialen Schnitt,
- Fig. 9: eine zur alternativen Buchsenanordnung gehörige Kragenbuchse in Seitenansicht gemäß Pfeil IX in Fig.8,
- Fig.10: den axialen Schnitt X-X in Fig.9,
- Fig.11: eine weitere zur alternativen Buchsenanordung gehörige Kragenbuchse in Seitenansicht gemäß Pfeil XI in Fig.8,
- Fig.12: den axialen Schnitt XII-XII in Fig.11,
- Fig.13: eine Weiterbildung der in Fig.3 bis 7 dargestellten Buchsenanordnung in einem der Fig.3 entsprechenden axialen Schnitt und
- Fig.14: eine Weiterbildung der in Fig.8 bis 12 dargestellten Buchsenanordnung in einem der Fig.8 entsprechenden axialen Schnitt.

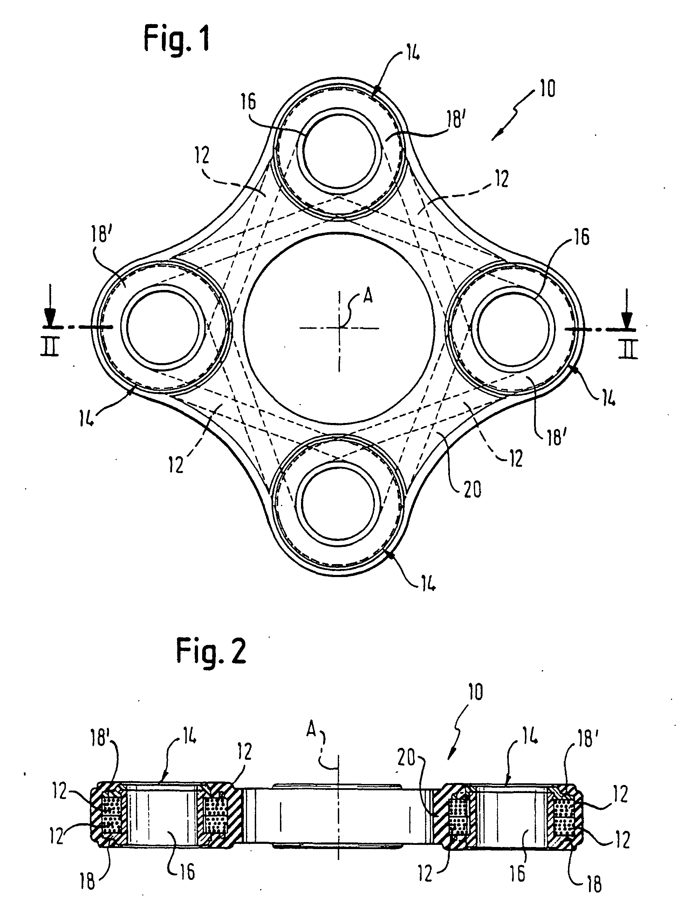

In Fig.1 und 2 ist ein Gelenkkörper 10 dargestellt, der beispielsweise dazu vorgesehen ist, zwei Lenkspindelabschnitte eines Kraftfahrzeugs kardanisch beweglich miteinander zu verbinden. Der Gelenkkörper 10 enthält vier längliche Schlingenpakete 12, von denen jedes in Form einer 8 in üblicher Weise aus Faden oder Draht gewickelt ist. Je zwei dieser Schlingenpakete 12 überlappen sich und bilden im Überlappungsbereich ein parallel zur Achse A des Gelenkkörpers 10 durchgehendes Loch, durch das eine Kragenbuchse 14 mit einem an ihr ausgebildeten, im wesentlichen zylindrischen Buchsenteil 16 hindurchgesteckt ist.

Jede der Kragenbuchsen 14 hat einen ersten Kragen 18, der mit dem Buchsenteil 16 einstückig hergestellt ist und von diesem radial nach außen ragt. Vorzugsweise sind die Kragenbuchsen 14 mit Ihrem Buchsenteil 16 und Kragen 18 aus Kunststoff, beispielsweise Polyamid, gespritzt. An jeder der Kragenbuchsen 14 ist ein gesondert hergestellter, vorzugsweise ebenfalls aus Polyamid gespritzter zweiter Kragen 18' derart befestigt, daß die Überlappungsbereiche der zugehörigen Schlingenpakete 12 zwischen dem ersten Kragen 18 und dem zweiten Kragen 18' aufgenommen und gegen axiale Verschiebung gesichert sind. In allen dargestellten Ausführungsbeispielen sind die Kragen 18' in Seitenansicht kreisringförmig und mit dem Buchsenteil 16 gleichachsig gestaltet. Die Kragen 18 und 18' können aber auch exzentrisch angeordnet oder länglich gestaltet sein; Ausführungsbeispiele solcher Anordnungen und Gestaltungen sind in DE-A-197 42 359 dargestellt und beschrieben.

Schließlich gehört zu dem Gelenkkörper 10 eine gummielastische Umhüllung 20, in welche die Schlingenpakete 12, die Buchsenteile 16 mit ihren einstückig ausgebildeten ersten Kragen 18 sowie die zweiten Kragen 18' einvulkanisiert werden, nachdem die Kragenbuchsen 14 mit dem zugehörigen zweiten Kragen 18' zu je einer vollständigen Buchsenanordnung vereint worden sind.

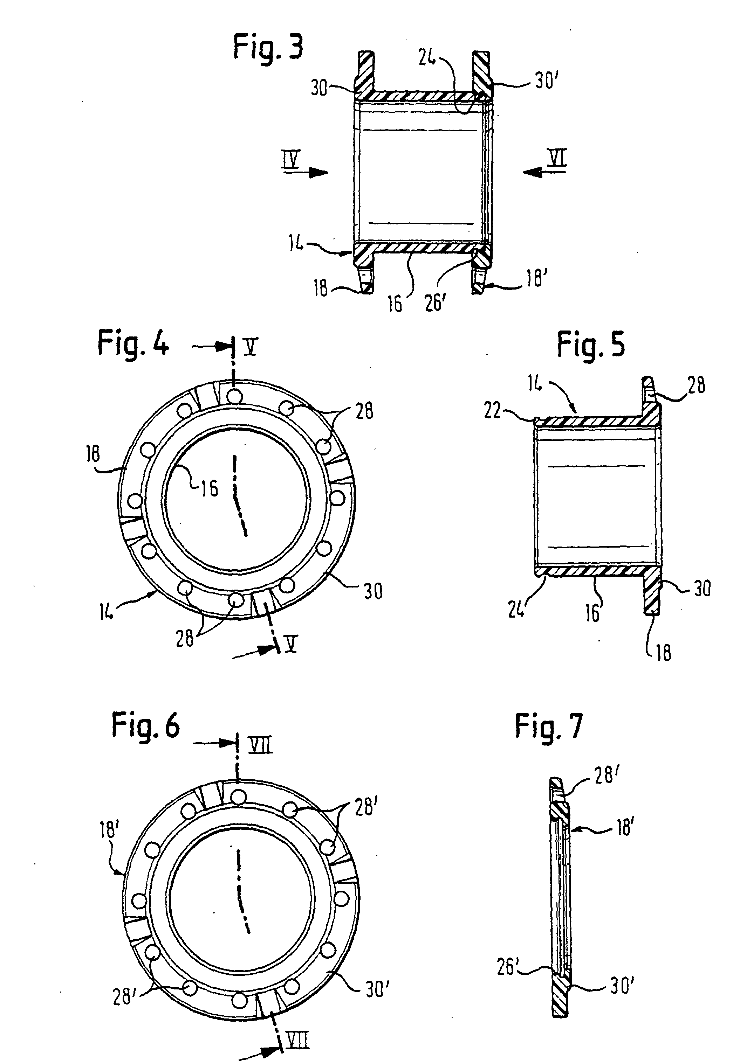

Fig.3 bis 7 zeigen eine der in Fig.1 und 2 dargestellten Buchsenanordnungen aus einer einstückig hergestellten Kragenbuchse 14 und einem daran befestigten, gesondert hergestellten zweiten Kragen 18'. Die Kragenbuchse 14 hat am vom ersten Kragen 18 entfernten ringförmigen Ende 22 ihres Buchsenteils 16 eine Rastvertiefung 24 in Form einer äußeren Ringrille. Auf der radial inneren Seite des zweiten Kragens 18' ist ein ringförmiger Rastvorsprung 26' ausgebildet, der mit der Rastvertiefung 24 eine Schnappverbindung bildet. Diese wird dadurch hergestellt, daß der zweite Kragen 18' mit mäßiger Kraft auf das Ende 22 des Buchsenteils 16 aufgeschoben wird, bis der Rastvorsprung 26' gemäß Fig.3 in die Rastvertiefung 24 eingerastet ist.

Die beiden Kragen 18 und 18' haben Löcher 28 bzw. 28', in welche die gummielastische Umhüllung 20 beim Vulkanisieren eindringt, so daß die Kragen fest verankert werden. Zum Festlegen des zum Vulkanisieren vorbereiteten Gelenkkörpers 10 in einer Vulkanisierform ist an der axial äußeren Seite jedes der Kragen 18 und 18' je ein axial vorspringender Anlagering 30 bzw. 30' ausgebildet. Wie vor allem aus Fig.3 ersichtlich ist, liegt der Anlagering 30' des zweiten Kragens 18' am Ende 22 des Buchsenteils 16 derart an, daß dieser Kragen nach dem Herstellen der Rastverbindung nicht weiter auf das Buchsenteil 16 aufgeschoben werden kann.

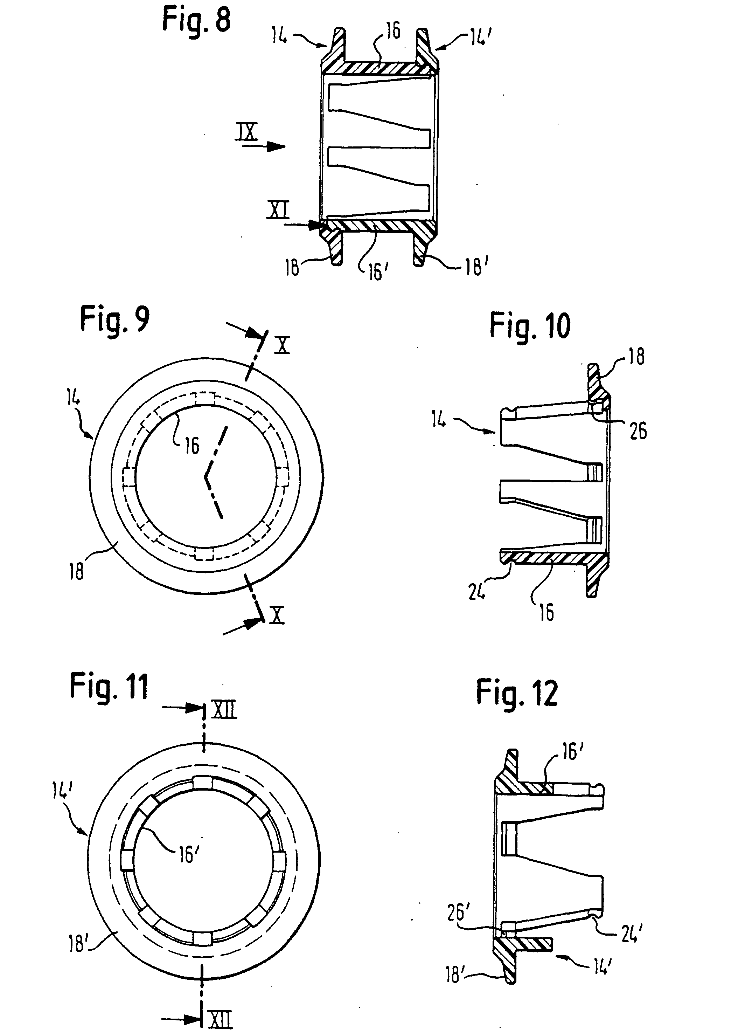

In Fig.8 bis 12 ist eine alternative Buchsenanorndung dargestellt, die anstelle der in Fig.3 bis 7 dargestellten Buchsenanordnung verwendet werden kann. Die Buchsenanordnung gemäß Fig.8 bis 12 ist aus zwei identischen Kragenbuchsen 14 und 14' zusammengesetzt; jede dieser Kragenbuchsen besteht aus einem Buchsenteil 16 bzw. 16' und einem damit einstückig hergestellten, vorzugsweise aus Polyamid gespritzten Kragen 18 bzw. 18'. Die beiden Buchsenteile 16 und 16' sind kronenartig gestaltet und haben nahe ihrem Ende 22 bzw. 22' Rastvertiefungen 24 bzw. 24', während am zugehörigen Kragen 18 bzw. 18' Rastvorsprünge 26 bzw. 26' ausgebildet sind. Die beiden Buchsenteile 16 und 16' lassen sich gemäß Fig.8 lückenlos ineinanderschieben, bis die Rastvorsprünge 26 in die Rastvertiefungen 24' sowie die Rastvorsprünge 26' in die Rastvertiefungen 24 eingerastet sind. Auch in diesem Fall ist ein weiteres axiales Zusammenschieben dadurch verhindert, daß die Anlageringe 30 und 30' jeder der beiden Kragenbuchsen 14 und 14' mit ihrer axial inneren Seite am benachbarten Ende 22' bzw. 22 des Buchsenteils 16' bzw. 16 anliegen.

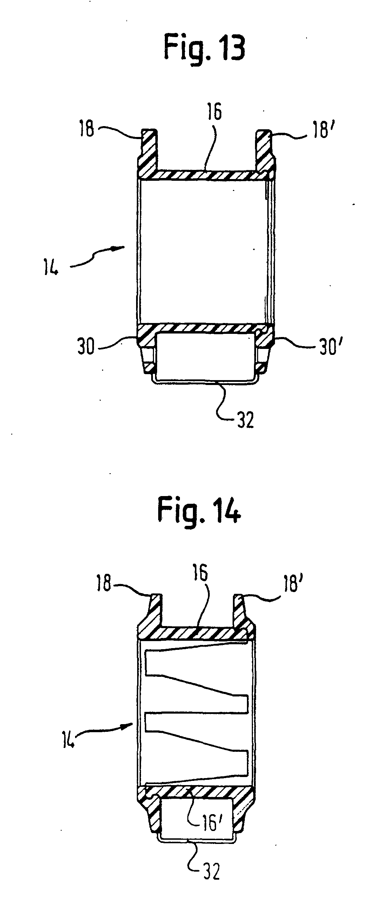

Die beiden in Fig.3 bis 7 einerseits und in Fig.8 bis 12 andererseits dargestellten Buchsenanordnungen können gemäß Fig.13 bzw. 14 dadurch weitergebildet sein, daß die aus dem Buchsenteil 16 und dem damit einstückigen ersten Kragen 18 bestehende Kragenbuchse 14 in einer gemeinsamen Form und in einem gemeinsamen Arbeitsgang mit dem zweiten Kragen 18' und mit einem die beiden Kragen 18 und 18' miteinander verbindenden Bügel 32 einstückig hergestellt, insbesondere aus Kunststoff gespritzt ist.

Die Buchsenanordnung gemäß Fig.13 wird ebenso wie die in Fig.3 bis 7 dargestellte dadurch montiert, daß der Buchsenteil 16 durch das zugehörige Schlingenpaket 12 bzw. durch den Überlappungsbereich zweier oder mehrere Schlingenpakete hindurchgesteckt und danach der zweite Kragen 18' auf das Buchsenteil 16 aufgerastet wird. Dabei wird der Bügel 32 um einen Kopfbereich des Schlingenpakets 12 bzw. der einander überlappenden Schlingenpakete herumgelegt, wodurch dieser Kopfbereich zusätzlich dagegen gesichert wird, vor dem Vulkanisieren der Umhüllung 20 zu verrutschen.

Die Buchsenanordnung gemäß Fig.14 wird entsprechend der in Fig.8 bis 12 dargestellten montiert, und dabei wird, wie im vorstehenden Absatz beschrieben, der Bügel 32 um das zugehörige Schlingenpaket 12 bzw. den Überlappungsbereich der zugehörigen Schlingenpakete herumgelegt.

Für alle dargestellten Ausführungsbeispiele gilt, daß die durch eine Rast- oder Schnappverbindung zusammengehaltenen Bestandteile jeder Buchsenanordnung zusätzlich miteinander verklebt oder verschweißt werden können. Dies ist bei dem in Fig.3 bis 7 dargestellten Ausführungsbeispiel besonders zweckmäßig, wenn es darauf ankommt, daß eine bestimmte torsionale Zuordnung der beiden Kragen 18 und 18' zueinander beibehalten wird. Beispiele dafür sind exzentrische und/oder langgestreckte Kragen 18 und 18', die entsprechend den Orientierungen benachbarter Schlingenpakete 12 unterschiedlich orientiert sein sollen. Gründe für solche unterschiedlichen Orientierungen sind in der erwähnten gleichzeitigen Patentanmeldung (Anwaltsakte 1A-78 685) beschrieben. Bei den Buchsenanordnungen gemäß Fig.13 und 14 sorgt der Bügel 32 dafür, daß eine bestimmte torsionale Zuordnung zusammengehöriger Kragen 18 und 18' bei der Montage ohne weiteres eingehalten wird.

## Patentansprüche

1. Elastischer Gelenkkörper (10) mit
- mindestens einem Schlingenpaket (12),
- Kragenbuchsen (14), die je einen Buchsenteil (16) und je einen daran einstückig angeformten ersten Kragen (18) aufweisen, mit ihrem Buchsenteil (16) durch das Schlingenpaket (12) hindurchgesteckt sind und mit ihrem Kragen (18) eine erste Schlingenpaketseite axial abstützen,
- einem zweiten Kragen (18'), der mit dem Buchsenteil (16) axial zusammengesteckt ist und eine zweite Schlingenpaketseite axial abstützt, und
- einer gummielastischen Umhüllung (20), in die das Schlingenpaket (12) zumindest teilweise eingebettet ist,
**dadurch gekennzeichnet, daß**
- die Kragenbuchse (14) am vom ersten Kragen (18) entfernten Ende (22) ihres Buchsenteils (16) eine radial äußere Rastanordnung (24) aufweist,
- am zweiten Kragen (18') eine radial innere Rastanordnung (26') ausgebildet ist, die mit der radial äußeren Rastanordnung (24) eine Schnappverbindung (24,26') bildet,
- die beiden Kragen (18,18') je einen in axialer Richtung vorspringenden Anlagering (30,30') zum Festlegen des Gelenkkörpers (10) in einer Form zum Vulkanisieren der Umhüllung (20) aufweisen und
- der Anlagering (30') des zweiten Kragens (18') das vom ersten Kragen (18) abgewandte Ende (22) des mit dem ersten Kragen (18) einstückigen Buchsenteils (16) in axialer Richtung überdeckt.

2. Elastischer Gelenkkörper (10) nach Anspruch 1,
**dadurch gekennzeichnet, daß** die radial äußere Rastanordnung eine Rastvertiefung (24) in Form einer äußeren Ringrille, und die radial innere Rastanordnung ein ebenfalls ringförmiger Rastvorsprung (26') ist.

3. Elastischer Gelenkkörper (10) nach Anspruch 1,
**dadurch gekennzeichnet, daß**
- der zweite Kragen (18') an einer zweiten Kragenbuchse (14') einstückig ausgebildet ist, die der erstgenannten Kragenbuchse (14) gleich ist, und
- die Buchsenteile (16,16') der beiden Kragenbuchsen (14, 14') kronenartig gestaltet und derart axial zusammengesteckt sind, daß jedes von ihnen sich bis zum Kragen (18',18) der anderen Kragenbuchse (14',14) erstreckt und mit ihm eine Schnappverbindung (24, 26'; 24', 26) bildet.

4. Elastischer Gelenkkörper (10) nach einem der Ansprüche 1 bis 3,
**dadurch gekennzeichnet, daß** die Kragenbuchsen (14,14') und Kragen (18,18') aus Kunststoff, insbesondere Polyamid, gespritzt sind.

5. Elastischer Gelenkkörper (10) nach Anspruch 4,
**dadurch gekennzeichnet, daß**
- die Kragen (18, 18') durch einen mit ihnen einstückigen elastischen Bügel (32) miteinander verbunden sind und
- der Bügel (32) um das zugehörige mindestens eine Schlingenpaket (12) herumgelegt ist.

6. Elastischer Gelenkkörper (10) nach einem der Ansprüche 1 bis 5,
**dadurch gekennzeichnet, daß** die Schnappverbindung durch Verkleben oder Verschweißen zusätzlich gesichert ist.

7. Elastischer Gelenkkörper (10) nach einem der Ansprüche 1 bis 6,
**dadurch gekennzeichnet, daß** die Kragen (18, 18') entsprechend der Längsrichtung des von ihnen abgestützten Schlingenpakets (12) langgestreckt und/oder exzentrisch sind.

## Claims

1. An elastic joint body (10), comprising
- at least one loop package (12),
- collar bushings (14) each of which includes a bushing member (16) and a first collar (18) integrally formed thereon, is passed with its bushing member (16) through the loop package (12) and supports with its collar (18) a first loop package side axially,
- a second collar (18') which is axially joined with the bushing member (16) and supports a second loop package side axially, and
- a rubber elastic jacket (20) in which the loop package (12) is embedded at least partially,
**characterised in that**
- the collar bushing (14) has at the end (22) of its bushing member (16) remote from the first collar (18) a radially outer catching means (24);
- a radially inner catching means (26'), which forms a snap connection (24, 26') together with the radially outer catching means, is provided on the second collar (18');
- the two collars (18, 18') include an abutment ring (30, 30') each projecting in axial direction for positioning the joint body (10) in a mould for vulcanising the jacket (20), and
- the abutment ring (30') of the second collar (18') covers in axial direction the end (22) averted from the first collar (18) of the bushing member (16) which is integral with the first collar (18).

2. The elastic joint body (10) according to claim 1,
**characterised in that** the radially outer catching means is a snap-in depression (24) having the shape of an outer annular groove, and the radially inner catching means is an also annular snap-in protrusion (26).

3. The elastic joint body (10) according to claim 1,
**characterised in that**
- the second collar (18') is integrally formed on a second collar bushing (14') which equals the first-mentioned collar bushing (14), and
- the bushing members (16, 16') of the two collar bushings (14, 14') have a crown-like configuration and are joined axially in such a manner that every one of them extends up to the collar (18', 18) of the other collar bushing (14', 14) and forms a snap connection (24, 26'; 24', 26) with the same.

4. The elastic joint body (10) according to one of claims 1 to 3,
**characterised in that** the collar bushings (14, 14') and the collars (18, 18') are injection-moulded from synthetic material, especially polyamide.

5. The elastic joint body (10) according to claim 4,
**characterised in that**
- the collars (18, 18') are interconnected by a resilient bracket (32) integral with them and
- the bracket (32) is laid around the associated at least one loop package (12).

6. The elastic joint body (10) according to one of claims 1 to 5,
**characterised in that** the snap connection is additionally secured by conglutination or bonding.

7. The elastic joint body (10) according to one of claims 1 to 6,
**characterised in that** the collars (18, 18') are long stretched out and/or eccentric, in accordance with the lengthwise direction of the loop package (12) they support.

## Revendications

1. Corps d'articulation (10) élastique comprenant
- au moins un paquet de boucles (12),
- des douilles à collerettes (14) qui présentent chacune une partie de douille (16) et chacune une première collerette (18) formée d'un seul tenant avec elle, traversent avec leur partie de douille (16) le paquet de boucles (12) et soutiennent avec leur collerette (18) un premier côté de paquets de boucles,
- une deuxième collerette (18') qui est connectée avec la partie de douille (16) axialement et soutient axialement un deuxième côté de paquets de boucles, et
- une enveloppe (20) élastique, dans laquelle le paquet de boucles (12) est enrobé au moins en partie,
**caractérisé en ce que**
- la douille à collerette (14) présente à son extrémité (22) éloignée de la première collerette (18) de sa partie de douille (16) une disposition d'enclenchement radialement extérieure (24),
- sur la deuxième collerette (18') est formée une disposition d'enclenchement radialement intérieure (26') qui forme avec la disposition d'enclenchement radialement extérieure (24), un assemblage par encliquetage (24, 26')
- les deux collerettes (18, 18') présentent chacune dépassant dans une direction axiale un anneau d'application (30, 30') pour la fixation du corps d'articulation (10) dans une forme pour vulcaniser l'enveloppe (20) et
- l'anneau d'application (30') de la deuxième collerette (18') recouvre l'extrémité (22) opposée à la première collerette (18) de la partie de douille (16) formée d'un seul tenant avec la première collerette (18) dans la direction axiale .

2. Corps d'articulation (10) élastique selon la revendication 1,
**caractérisé en ce que** la disposition d'enclenchement radialement extérieure est un approfondissement d'enclenchement (24) sous la forme d'une cannelure annulaire extérieure, et la disposition d'enclenchement radialement intérieure est une saillie d'enclenchement également annulaire (26')

3. Corps d'articulation (10) élastique selon la revendication 1,
**caractérisé en ce que**
- la deuxième collerette (18') est formée d'un seul tenant sur une deuxième douille à collerette (14') qui est identique à la première douille à collerette (14), et
- les parties de douille (16, 16') des deux douilles à collerette (14, 14') sont conformées en forme de couronne et sont fixées axialement entre elles de telle manière que chacune d'entre d'elles s'étende jusqu'à la collerette (18', 18) de l'autre douille à collerette (14', 14) et forme avec celle-ci une liaison à enclenchement (24, 26'; 24', 26).

4. Corps d'articulation (10) élastique selon l'une quelconque des revendications 1 à 3,
**caractérisé en ce que** les douilles à collerettes (14, 14') et les collerettes (18, 18') sont moulées par injection en matière synthétique, en particulier en polyamide.

5. Corps d'articulation (10) élastique selon la revendication 4,
**caractérisé en ce que**
- les collerettes (18, 18') sont reliées entre elles par un étrier (32) élastique formé d'un seul tenant avec celles-ci et
- l'étrier (32) est disposé autour d'au moins un paquet de boucles (12) associé.

6. Corps d'articulation (10) élastique selon l'une quelconque des revendications 1 à 5,
**caractérisé en ce que** la liaison par enclenchement est de plus sécurisée par collage ou soudage.

7. Corps d'articulation (10) élastique selon l'une quelconque des revendications 1 à 6,
**caractérisé en ce que** les collerettes (18, 18') selon la direction longitudinale du paquet de boucles (12) soutenu par elles sont allongées et / ou excentrées.
